# EUROPÄISCHE PATENTSCHRIFT

(11) **EP 1 486 388 B1**
(45) Veröffentlichungstag und Bekanntmachung des Hinweises auf die Patenterteilung: **06.09.2006**
(21) Anmeldenummer: 04013308.4
(22) Anmeldetag: 05.06.2004
(51) Int. Cl.: B60S 1/08

(54) **Optoelektronische Sensoreinrichtung**
Optoelectronic sensor device
Dispositif de détection opto-électronique

(30) Priorität: 14.06.2003 DE 10326855
(43) Veröffentlichungstag der Anmeldung: 15.12.2004
(73) Patentinhaber: Hella KGaA Hueck & Co., 59552 Lippstadt (DE)
(72) Erfinder: Schulte, Michael, 33106 Paderborn (DE); Feldkamp, Horst, 59557 Lippstadt (DE)

(56) Entgegenhaltungen:
- EP-A- 1 295 766
- WO-A-99/09681
- WO-A-03/041977
- DE-A1- 19 933 640
- DE-C1- 10 147 182
- DE-C1- 19 647 200

## Beschreibung

### STAND DER TECHNIK

Die Erfindung betrifft eine Sensoreinrichtung zur Erfassung der Benetzung einer Scheibe, insbesondere einer Kraftfahrzeugscheibe, mit einem Gehäuse, welches ein Gehäuseteil und ein Abdeckungsteil umfasst, wobei das Gehäuseteil und das Abdeckungsteil über erste Verbindungselemente miteinander verbunden sind.

Eine derartige Sensoreinrichtung ist aus der Druckschrift EP 1 295 766 A2 bekannt. Diese Druckschrift offenbart eine Sensoreinrichtung die (siehe dort Fig. 1 und 2) als erste Verbindungselemente Rastnasen und Rasthaken aufweist, die in einer einzigen Relativposition des Gehäuseteils und des Abdeckungsteils zueinander und miteinander verbunden werden können. Eine Verbindung des Gehäuseteils und des Abdeckungsteils in einer anderen Relativposition ist nicht möglich. Es ist insbesondere nicht möglich das Abdeckungsteil und das Gehäuseteil in einer anderen Winkelstellung zueinander zu verbinden, da die Verbindungselemente in verschiedenen Winkeln zueinander angeordnet sind.

Ferner ist an dem Abdeckungsteil ein Steckverbinder vorgesehen. Die Position dieses Steckverbinders ist durch die Befestigungsposition von Abdeckungsteil und Gehäuseteil zueinander festgelegt. Bei verschiedenen Fahrzeugtypen sind jedoch verschiedene Positionen des Steckverbinders erforderlich. So wünschen einige Fahrzeughersteller für ihre Fahrzeugtypen eine 0° Position des Steckverbinders bezogen auf eine durch die Lichteinkoppelelemente und die Lichtauskoppelelemente festgelegte Achse, während andere eine 28° Position oder eine 180° Position wünschen. In der Vergangenheit mussten, um diese Anforderung zu erfüllen, verschiedene Gehäuseteile beziehungsweise Abdeckungsteile gefertigt werden. Dieses machte verschiedene Werkzeuge oder Wechseleinsätze für Werkzeuge notwendig. Dieses führt zu Mehrkosten, die es zu vermeiden gilt.

Aus der Druckschrift mit der Veröffentlichungsnummer DE 196 47 200 C1 ist ein Gehäuse für ein Dachmodul bekannt, dass eine Trägereinheit und eine Abdeckklappe aufweist, die durch Relativverschiebung in zwei verschiedene definierte Rastpositionen gebracht werden können. Die eine Rastposition wird während der Montage des Dachmoduls eingenommen, die zweite Rastposition wird im montierte Zustand des Dachmoduls eingenommen.

Der Erfindung liegt daher die Aufgabe zugrunde, eine Sensoreinrichtung vorzuschlagen, bei welcher verschiedene Steckverbinderpositionen realisiert werden können.

Diese Aufgabe wird erfindungsgemäß durch eine Sensoreinrichtung gemäß Anspruch 1 gelöst. Dem gemäß weist das Gehäuseteil neben den ersten Verbindungselementen weitere Verbindungselemente auf, welche mit den ersten Verbindungselementen des Abdeckungsteils verbindbar sind. Gleichzeitig oder alternativ kann das Abdeckungsteil neben den ersten Verbindungselementen weitere Verbindungselemente aufweisen, welche mit den ersten Verbindungselementen des Gehäuseteils verbindbar sind.

Gemäß der Erfindung können die ersten und die weiteren Verbindungselemente des Gehäuseteils Rastnasen sein. Vorteilhaft sind dann die ersten Verbindungselemente des Abdeckungsteils Rasthaken.

Gemäß der Erfindung sind die Verbindungselemente in Draufsicht auf das Gehäuseteil beziehungsweise auf das Abdeckungsteil punktsymmetrisch zu dem Mittelpunkt des Gehäuseteils beziehungsweise des Abdeckungsteils an dem Gehäuseteil beziehungsweise dem Abdeckungsteil angeordnet. Dadurch werden jeweils Paare von gegenüberliegenden Verbindungselementen gebildet, welche mit einem Paar von Verbindungselementen an dem jeweils anderen Teil des Gehäuses die Verbindung von Gehäuseteil und Abdeckungsteil herstellen beziehungsweise herstellen können.

Vorteilhaft ist das Gehäuseteil und das Abdeckungsteil im Querschnitt kreisförmig.

Die Sensoreinrichtung kann gemäß der Erfindung einen Schaltungsträger umfassen, welcher vorteilhaft in dem Gehäuse angeordnet ist.

Ein an dem Gehäuse vorgesehener Steckverbinder kann Kontaktelemente umfassen. Diese Kontaktelemente ragen dann vorteilhaft in das Innere des Gehäuses hinein.

Der Schaltungsträger, welcher in dem Gehäuse der Sensoreinrichtung angebracht ist, weist vorteilhaft eine Gruppe erster Kontaktstellen und eine oder mehrere Gruppen weiterer Kontaktstellen auf. Diese ersten Kontaktstellen oder die Kontaktstellen einer der weiteren Gruppen können dann gemäß der Erfindung mit den Kontaktelementen des Steckverbinders elektrisch verbunden sein.

### BESCHREIBUNG DER AUSFÜHRUNGSBEISPIELE

Ein Ausführungsbeispiel für eine erfindungsgemäße Sensoreinrichtung ist anhand der Zeichnung näher beschrieben. Darin zeigt
- Fig. 1: eine perspektivische Ansicht eines Sensors, der an einer Scheibe angebracht ist,
- Fig. 2: einen Schnitt durch die Anordnung gemäß Fig. 1,
- Fig. 3: eine perspektivische Ansicht von schräg oben auf den erfindungsgemäßen Sensor,
- Fig. 4a bis 4c: eine Draufsicht auf den erfindungsgemäßen Sensor mit in verschiedenen Positionen aufgesetzten Abdeckungsteil,
- Fig. 5a bis 5c: die Ansichten des Sensors gemäß der Fig. 4a bis 4c von unten und
- Fig. 6: eine Ansicht auf die Innenseite eines Abdeckungsteils mit Leiterplatte des erfindungsgemäßen Sensors.

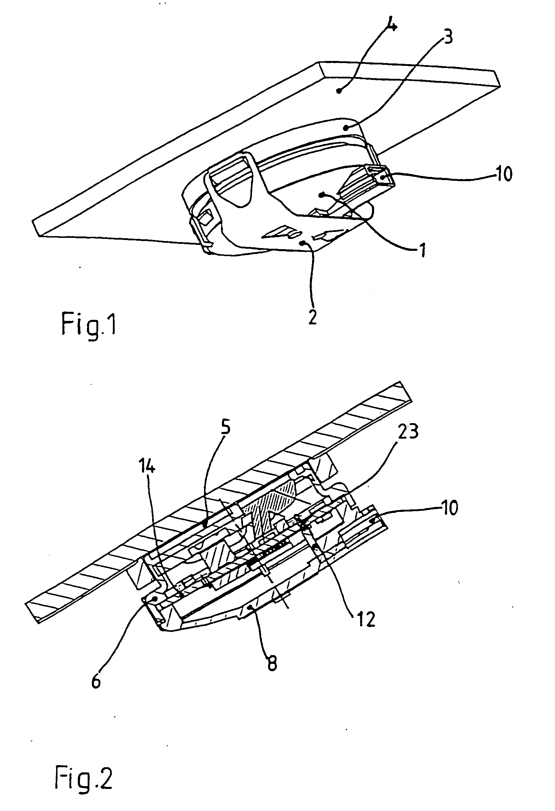

Die in den Fig. 1 bis 6 dargestellte Sensoreinrichtung 1 weist ein Gehäuse 6, 8 auf, welches ein Gehäuseteil 6 und ein Abdeckungsteil 8 umfasst. Das Gehäuse 6, 8 der Sensoreinrichtung 1 ist mit dem Gehäuseteil 6 an einer Scheibe 4 befestigt beziehungsweise befestigbar. Sowohl das Gehäuseteil 6 als auch das Abdeckungsteil 8 sind im Querschnitt kreisförmig ausgebildet, d. h. sie bestehen aus einem Hohlzylinderabschnitt. Dieser Hohlzylinderabschnitt ist jeweils einseitig verschlossen. Sowohl das Gehäuseteil 6 als auch das Abdeckungsteil 8 weisen daher eine Stirnwandung auf. In das Gehäuseteil 6 sind Lichteinkoppelelemente und Lichtauskoppelelemente vorzugsweise einstückig im Spritzgießverfahren in der Stirnwandung des Gehäuseteils 6 ausgebildet, mit welchem das Gehäuseteil 6 an die Scheibe 4 angekoppelt ist. Dabei wird das Gehäuseteil 6 samt Stirnwandung bis auf die Lichteinkoppelelemente und Lichtauskoppelelemente aus einem für Infrarotstrahlung und für sichtbare Strahlung undurchlässige Material abgespritzt, während die Lichteinkopplungselemente und Lichtauskoppelelemente aus einem für die Senderstrahlung, vorzugsweise Infrarotstrahlung, transparenten Material besteht. Zur Aufnahme von elektronischen Bauelementen der Sensoreinrichtung zum Beispiel Sender und Empfänger für die Senderstrahlung sowie gegebenenfalls Aufnahme von Lichtempfängern zur Dedektion der Lichtverhältnisse außerhalb der Scheibe, weist die Sensoreinrichtung einen Schaltungsträger 15 auf, die so in dem Abdeckungsteil 8 fixiert wird, dass die Sender und Empfänger sowie die Lichtempfänger positionsgenau zu den Lichteinkoppelelementen, Lichtauskoppelelementen und gegebenenfalls zu Lichtleitelementen angeordnet sind. Zu diesem Zweck weist die Leiterplatte 15 nicht dargestellte Positionierungslöcher auf, in die zwei Positionierstifte des Abdeckungsteils 8 eingesteckt werden.

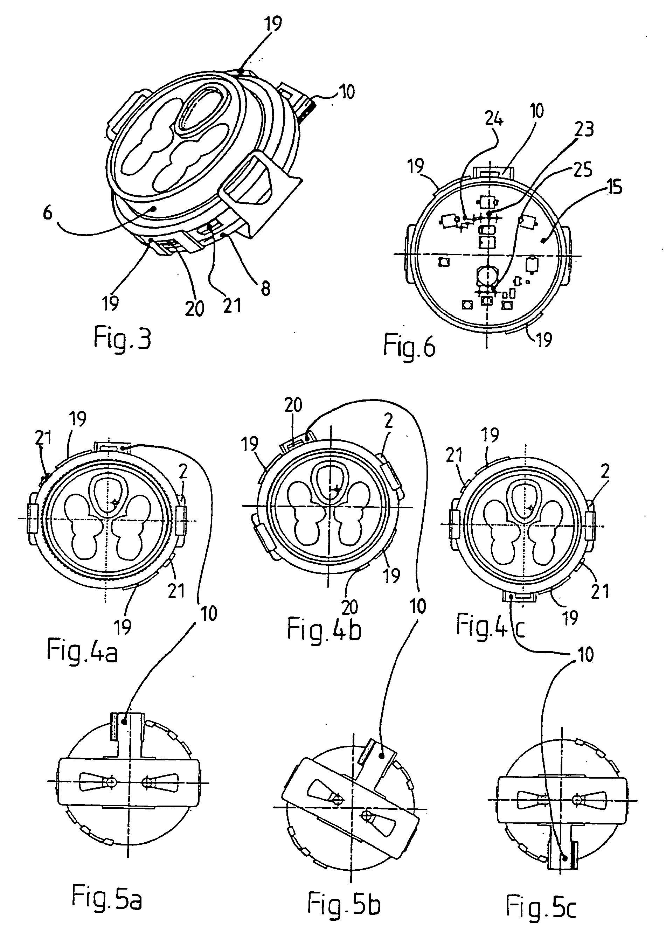

An dem Abdeckungsteil ist ein Steckverbinder 10 vorgesehen, welcher Kontaktelemente 12 aufweist. Diese Kontaktelemente 12 ragen einerseits in einen Steckerkragen des Steckverbinders 10 hinein und ragen andererseits in das Gehäuse 6, 8 der Sensoreinrichtung 1 hinein. Sie sind dort so angebracht, dass sie in einen Presskontakt 23 der Leiterplatte hineinragen und dort durch Einpressen mit der Leiterplatte 15 mechanisch und elektrisch verbunden sind. Die Presskontakte 23 bilden eine Gruppe von ersten Kontaktstellen der Leiterplatte 15. Darüber hinaus weist die Leiterplatte 15, wie in Fig. 6 dargestellt ist, zwei weitere Gruppen 24, 25 von Kontaktstellen auf. Wobei eine zweite Gruppe von Kontaktstellen um wenige Grad (28°) verdreht bezüglich eines Mittelpunktes der Leiterplatte angeordnet ist und eine dritte Gruppe von Kontaktstellen diagonal gegenüberliegend (180° verdreht) zu der ersten Gruppe von Kontaktstellen angeordnet ist.

An der äußeren Mantelfläche des Abdeckungsteils 8 sind an zwei gegenüberliegenden Stellen Rasthaken 19 angebracht. Diese Rasthaken sind Verbindungselemente des Abdeckungsteils 8, welche mit Verbindungselementen des Gehäuseteils 6 zusammenwirken. Die Verbindungselemente des. Gehäuseteils 6 sind dagegen Rastnasen 20, 21. Das Gehäuseteil 6 weist dabei ein Paar erster Rastnase 20 und ein Paar zweiter Rastnasen 21 auf, die um den gleichen Winkel zueinander verdreht angeordnet sind, wie die erste Gruppe von Kontaktstellen und die zweite Gruppe 24 von Kontaktstellen der Leiterplatte 15.

Die verschiedenen Gruppen 23, 24, 25 von Kontaktstellen so wie die verschiedenen Rastnasen 20, 21 an dem Gehäuseteil 6 ermöglichen, dass das Abdeckungsteil 8 in verschiedenen Positionen auf das Gehäuseteil 6 aufgesetzt werden kann, wobei die elektrischen Bauelemente relativ zu dem Gehäuseteil 6 immer in der gleichen Position liegen. Dazu muss die Leiterplatte 15, welche die elektrischen Bauelemente trägt, in verschiedenen Positionen auf das Abdeckungsteil 8 aufgesetzt werden. Die Kontaktstellen beziehungsweise die die Kontaktstellen bildenden Bohrungen nehmen dabei in jeweils verschiedenen Positionen die Kontaktelemente 12 des Steckverbinders 10 auf. Dabei kann die Leiterplatte in einer 0° Position (Fig. 1 bis 3, Fig. 4a, Fig. 5a, Fig. 6), in einer 28° Position (Fig. 4b, Fig. 5b) und in einer 180° Position (Fig. 4c, Fig. 5c) eingesetzt werden. Entsprechend der Position der Leiterplatte 15 wird dann das Abdeckungsteil 8 in entsprechenden Positionen mit dem Gehäuseteil 6 verbunden. Die Relativpositionen sind auch hier eine 0° Position (Fig. 1 bis 3, Fig. 4a, Fig. 5a, Fig. 6), eine 28° Position (Fig. 4b, Fig. 5b) und eine 180° Position (Fig. 4c, Fig. 5c). Die Anbringung des Abdeckungsteils in verschiedenen Positionen an dem Gehäuseteil 6 bei gleicher Relativlage der Lichteinkoppelelemente und der Lichtauskoppelelemente zu der Leiterplatte ermöglicht, dass der Steckverbinder 10 in verschiedenen Positionen zu dem Gehäuseteil 6 positioniert ist. Die Sensoreinrichtung kann somit durch Ausrichtung des Steckverbinders 10 in verschiedenen Positionen an verschiedene Fahrzeugtypen angepasst werden. Separate Sensoreinrichtungen für verschiedene Fahrzeugtypen sind daher nicht notwendig. Durch ein entsprechendes Zusammenfügen von Leiterplatte 15, Abdeckungsteil 8 und Gehäuseteil 6 wird die Steckverbinderposition auf die verschiedenen Fahrzeugtypen angepasst.

Zur Befestigung der Sensoreinrichtung 1 an der Scheibe 4 wird zunächst ein Befestigungsring 3 an der Scheibe 4 befestigt, in welchen die Sensoreinrichtung unter Zwischenschaltung eines flexiblen und transparenten optischen Kopplungspad 5 eingesetzt wird, das der blasenfreien optischen Ankopplung der Sensoreinrichtung 1 an der Scheibe 4 dient. An der Stirnwandung des Abdeckungsteils 8 ist außen ein Bügel 2 befestigt, welcher das Gehäuse 6, 8 der Sensoreinrichtung 1 übergreift und zur Befestigung der Sensoreinrichtung 1 mit dem Befestigungsring 3 verrastet ist.

## Patentansprüche

1. Sensoreinrichtung zur Erfassung der Benetzung einer Scheibe (4), insbesondere einer Kraftfahrzeugscheibe, mit einem Gehäuse (6, 8), welches ein Gehäuseteil (6) und ein Abdeckungsteil (8) umfasst,
- wobei das Gehäuseteil (6) und das Abdeckungsteil (8) über erste Verbindungselemente (19, 20) miteinander verbunden sind,
- wobei das Gehäuseteil (6) weitere Verbindungselemente (21) aufweist, welche mit den ersten Verbindungselementen (19) des Abdeckungsteils (8) verbindbar sind
- und/oder das Abdeckungsteil (8) weitere Verbindungselemente aufweist, welche mit den ersten Verbindungselementen (20) des Gehäuseteils (6) verbindbar sind, und
- wobei die ersten und die weiteren Verbindungselemente (19, 20, 21) in Draufsicht auf das Gehäuseteil (6) beziehungsweise auf das Abdeckungsteil (8) punktsymetrisch zu dem Mittelpunkt des Gehäuseteils (6) beziehungsweise des Abdeckungsteils (8) an dem Gehäuseteil (6) beziehungsweise dem Abdeckungsteil (8) angeordnet sind.

2. Sensoreinrichtung nach dem vorhergehenden Anspruch, **dadurch gekennzeichnet, dass** die ersten und die weiteren Verbindungselemente (20, 21) des Gehäuseteils (6) Rastnasen sind.

3. Sensor nach einem der vorhergehenden Ansprüche, **dadurch gekennzeichnet, dass** die ersten Verbindungselemente (19) des Abdeckungsteils (8) Rasthaken sind.

4. Sensoreinrichtung nach einem der vorhergehenden Ansprüche, **dadurch gekennzeichnet, dass** das Gehäuseteil (6) und das Abdeckungsteil (8) im Querschnitt kreisförmig sind.

5. Sensoreinrichtung nach einem der vorhergehenden Ansprüche, **dadurch gekennzeichnet, dass** an dem Abdeckungsteil (8) ein Steckverbinder (10) angebracht ist.

6. Sensoreinrichtung nach einem der vorhergehenden Ansprüche, **dadurch gekennzeichnet, dass** die Sensoreinrichtung (1) einen Schaltungsträger (15) umfasst.

7. Sensoreinrichtung nach dem vorhergehenden Anspruch, **dadurch gekennzeichnet, dass** der Schaltungsträger (15) in dem Gehäuse (6, 8) angeordnet ist.

8. Sensoreinrichtung nach Anspruch 5, **dadurch gekennzeichnet, dass** der Steckverbinder (10) Kontaktelemente (12) aufweist.

9. Sensoreinrichtung nach dem vorhergehenden Anspruch, **dadurch gekennzeichnet, dass** die Kontaktelemente (12) in das Innere des Gehäuses (6, 8) hineinragen.

10. Sensoreinrichtung nach dem vorhergehenden Anspruch, **dadurch gekennzeichnet, dass** der Schaltungsträger (15) einer Gruppe erster Kontaktstellen (23) und eine oder mehrere Gruppen weiterer Kontaktstellen (24, 25) aufweist.

11. Sensoreinrichtung nach dem vorhergehenden Anspruch, **dadurch gekennzeichnet, dass** Kontaktelemente (12) mit den ersten Kontaktstellen (23) oder mit den Kontaktstellen (24, 25) einer der weiteren Gruppen elektrisch verbunden ist.

## Claims

1. Sensor device for detecting the wetting of a window (4), in particular a motor vehicle windscreen, having a housing (6, 8) comprising a housing member (6) and a cover member (8),
- wherein the housing member (6) and the cover member (8) are connected to each other via first connecting elements (19, 20),
- wherein the housing member (6) has further connecting elements (21) which are connectable to the first connecting elements (19) of the cover member (8),
- and/or the cover member (8) has further connecting elements which are connectable to the first connecting elements (20) of the housing member (6), and
- wherein the first and the further connecting elements (19, 20, 21) are arranged, seen in a plan view of the housing member (6) and/or the cover member (8), on the housing member (6) and/or on the cover member (8) in point symmetrical manner about the centre point of the housing member (6) and/or the cover member (8).

2. Sensor device according to the preceding claim, **characterised in that** the first and further connecting elements (20, 21) of the housing member (6) are snap-in lugs.

3. Sensor device according to one of the preceding claims, **characterised in that** the first connecting elements (19) of the cover member (8) are snap-in hooks.

4. Sensor device according to one of the preceding claims, **characterised in that** the housing member (6) and the cover member (8) are circular in cross-section.

5. Sensor device according to one of the preceding claims, **characterised in that** a plug connector (10) is mounted on the cover member (8).

6. Sensor device according to one of the preceding claims, **characterised in that** the sensor device (1) comprises a circuit board (15).

7. Sensor device according to the preceding claim, **characterised in that** the circuit board (15) is disposed within the housing (6, 8).

8. Sensor device according to claim 5, **characterised in that** the plug connector (10) has contact elements (12).

9. Sensor device according to the preceding claim, **characterised in that** the contact elements (12) project into the interior of the housing (6, 8).

10. Sensor device according to the preceding claim, **characterised in that** the circuit board (15) has a group of first contact sites (23) and one or more groups of further contact sites (24, 25).

11. Sensor device according to the preceding claim, **characterised in that** contact elements (12) are electrically connected to the first contact sites (23) or to the contact sites (24, 25) of one of the further groups.

## Revendications

1. Système de capteur pour détecter le mouillage d'une vitre (4), en particulier une vitre de véhicule, comportant un boîtier (6, 8) formé par une partie de boîtier (6) et une partie de couvercle (8),
- dans lequel la partie de boîtier (6) et la partie de couvercle (8) sont reliées l'une à l'autre au moyen de premiers éléments d'assemblage (19, 20),
- dans lequel la partie de boîtier (6) comporte des éléments d'assemblage supplémentaires (21) qui peuvent être reliés aux premiers éléments d'assemblage (19) de la partie de couvercle (8),
- et/ou la partie de couvercle (8) comporte des éléments d'assemblage supplémentaires qui peuvent être reliés aux premiers éléments d'assemblage (20) de la partie de boîtier (6), et
- dans lequel les premiers éléments d'assemblage (19, 20) et les éléments d'assemblage supplémentaires (21), par référence à une vue en élévation de la partie de boîtier (6) ou de la partie de couvercle (8), sont montés symétriques par rapport au centre de la partie de boîtier (6) ou de la partie de couvercle (8), sur la partie de boîtier (6) ou sur la partie de couvercle (8).

2. Système de capteur selon la revendication précédente, **caractérisé en ce que** les premiers éléments d'assemblage (20) et les éléments d'assemblage supplémentaires (21) de la partie de boîtier (6) sont des taquets d'arrêt.

3. Capteur selon l'une quelconque des revendications précédentes, **caractérisé en ce que** les premiers éléments d'assemblage (19) de la partie de couvercle (8) sont des crochets de fixation.

4. Système de capteur selon l'une quelconque des revendications précédentes, **caractérisé en ce que** la partie de boîtier (6) et la partie de couvercle (8) ont une section de forme circulaire.

5. Système de capteur selon l'une quelconque des revendications précédentes, **caractérisé en ce qu'**un connecteur à fiches (10) est monté sur la partie de couvercle (8).

6. Système de capteur selon l'une quelconque des revendications précédentes, **caractérisé en ce que** le système de capteur (1) comporte une plaquette de circuits imprimés (15) .

7. Système de capteur selon la revendication précédente, **caractérisé en ce que** la plaquette de circuits imprimés (15) est agencée dans le boîtier (6, 8).

8. Système de capteur selon la revendication 5, **caractérisé en ce que** le connecteur à fiches (10) comporte des éléments de contact (12).

9. Système de capteur selon la revendication précédente, **caractérisé en ce que** les éléments de contact (12) s'engagent à l'intérieur du boîtier (6, 8).

10. Système de capteur selon la revendication précédente, **caractérisé en ce que** la plaquette de circuits imprimés (15) comporte un groupe de premières zones de contacts (23) et un ou plusieurs groupes de zones de contacts (24, 25) supplémentaires.

11. Système de capteur selon la revendication précédente, **caractérisé en ce que** des éléments de contact (12) sont reliés électriquement aux premières zones de contacts (23) ou aux zones de contacts (24, 25) de l'un des autres groupes.
